**Europäisches Patentamt**

**European Patent Office**

**Office européen des brevets**

(11) Veröffentlichungsnummer: **0 214 439**
**A2**

## (12) EUROPÄISCHE PATENTANMELDUNG

(21) Anmeldenummer: **86110475.0**

(22) Anmeldetag: **29.07.86**

(51) Int. Cl.⁴: **A 47 J 37/07**
**A 47 J 37/06**

(30) Priorität: **12.09.85 DE 8526032 U**

(43) Veröffentlichungstag der Anmeldung:
**18.03.87 Patentblatt 87/12**

(84) Benannte Vertragsstaaten:
**AT CH DE FR GB IT LI NL SE**

(71) Anmelder: **Reinhold Mack GmbH u. Co. Werkzeugbau -**
**Metallwaren**
**JahnstraBe 144**
**D-7320 Göppingen(DE)**

(72) Erfinder: **Hotzy, Johann**
**St. Wolfgangsweg**
**D-7341 Gruibingen(DE)**

(74) Vertreter: **Seemann, Norbert W.**
**Brehmstrasse 37**
**D-7320 Göppingen(DE)**

(54) Grillgutauflage.

(57) Es wird eine teller- oder plattenförmige Grillrostauflage (1) vorgeschlagen, bei der die Ablaufrinnen (2) vom Plattenzentrum (3) aus geneigt zu den tiefer liegenden Randzonen (4) der jeweiligen Platte (1) hin verlaufen und die Heizgasdurchtrittsöffnungen (7, 7a) sich jeweils im Bereich zwischen den Grillgutauflagekanten (2a) zueinander benachbarter Ablaufrinnen (2) befinden.

Typisch hierbei ist eine von oben gesehen sternförmig verlaufende, symmetrische Anordnung der Ablaufrinnen (2) und Einmündung derselben in einen entsprechend vertieften Sammelkanal (5) in den Randzonen (4) der Platte (1).

Fig. 5

European Patent Attorney

Dipl.-Ing. **NORBERT W. SEEMANN**

Patent- und Zivilingenieur
Mandataire en brevets Européens

Patentbüro: **0214439**

Brehmstraße 37
D-7320 Göppingen

Tel. 07161-71166

Telegramme:
„Seepatent"

17. Juli 1986

EP (G) 8516 (M)

Anmelderin:

Reinhold Mack GmbH & Co.

Werkzeugbau - Metallwaren

Jahnstraße 144

7320  Göppingen


Grillgutauflage

Die Neuerung bezieht sich auf eine teller- oder plattenförmige Grillgutauflage nach dem Oberbegriff des Hauptanspruchs, und geht dabei aus von ebenflächigen Grilltellern und stabförmigen Grillrosten, wie sie beispielsweise aus dem alten DE-GM 73 32 390 bzw. dem neueren DE-GM 84 36 385 bekannt sind und vornehmlich dem Zweck dienen sollen, das Abtropfen von flüssigem Fett bzw. Fleischsaft in die Grillglut und damit eine umweltbeeinträchtigende Qualm- oder Rauchgasbildung bzw. störende Geruchsbelästigung genau so zu vermeiden, wie die Anreicherung des Grillgutes selbst mit gesundheitsschädigenden und sogar krebserregenden Schadstoffen wie vor allem Benzpyrenen, also aromatischen Kohlenwasserstoffen aus Teerbestandteilen, die zwangsläufig stets bei der Verkohlung zellulose- oder fetthaltigen Stoffen entstehen.

Während bei dem hier als Stand der Technik genannten DE-GM 73 32 390 der wesentliche Nachteil darin liegt, daß einerseits durch die ebenflächige Plattenbodenausbildung keine gute Fettableitung zum als Sammelrinne dienenden Plattenrand gegeben ist, und zum anderen auch durch die kleinen Seitenschlitze in den nockenförmigen Bodenerhebungen nicht genügend und zudem nur unregelmäßig Heizgase zum Grillgut aufsteigen, liegt der Hauptnachteil bei der Ausführung gemäß dem DE-GM 84 36 385 und ähnlicher Vorgängerschutzrechte in dem kompliziert fertigungstechnischen unddamit teuren Gesamtaufbau der dortigen Roste und deren Eignung lediglich für Grillgeräte mit rechteckiger Grundform.

Aufgabe der vorliegenden Neuerung ist es daher, unter Vermeidung der zuvor erwähnten Nachteile eine Grillgutauflage zu schaffen, die optimale biologische Grillergebnisse bei zugleich größtmöglicher Umweltfreundlichkeit gewährleistet.

**0214439**

Gelöst wird diese Aufgabe dabei durch die in den Patentansprüchen angegebenen, baulichen Mittel und anordnungstechnischen Maßnahmen.

In der Zeichnung sind zwei alternative Ausführungsbeispiele der Erfindung dargestellt und im folgenden näher beschrieben.

Es zeigen:

Fig. 1    den Querschnitt durch eine erfindungsgemäße Grillgutauflage, aufgesetzt auf ein transportables Holzkohlengrillgerät,

Fig. 2    in gegenüber Fig. 1 vergrößertem Maßstab und in leicht perspektivischer Darstellung die Draufsicht auf einen Teil der Oberfläche der Grillgutauflage,

Fig. 3    in gegenüber Fig. 1 verkleinertem Maßstab eine weitestgehend schematische Gesamtdraufsicht auf ein Ausführungsbeispiel der Erfindung,

Fig. 4    eine Alternativausführung zu Fig. 3 in rechteckiger Grundform,

Fig. 5     eine Draufsicht auf eine Grillgutauflage nach Fig. 1 aus der sog.-
Vogelperspektive und

Fig. 6     den Abhebegriff für die Grillgutauflage aus der Vogelperspektive gesehen.

Die erfindungsgemäße Grillgutauflage zeichnet sich zunächst generell dadurch aus, daß die Ablaufrinnen 2 vom Plattenzentrum 3 aus geneigt zu den tiefer liegenden Randzonen 4 der jeweiligen Platte 1 hin verlaufen und die Heizgasdurchtrittsöffnungen 7, 7a sich jeweils zwischen den Grillgutauflagekanten 2a zueinander benachbarter Ablaufrinnen 2 befinden. Vorteilhafterweise bietet sich dabei eine von oben gesehen sternförmig symmetrische Anordnung der Ablaufrinnen 2 und Einmündung derselben in einen entsprechend vertieften Sammelkanal 5 in den Randzonen 4 der Platte 1 an. Als Vorteil ergibt sich dabei eine stetige Vergrößerung des Rinnenquerschnitts in Breite und Tiefe vom Plattenzentrum zum Sammelkanal 5 hin, wobei in den Randzonen 4 der Rinnenboden 2b als Einmündung daselbst ausläuft. Besonders rationell läßt sich eine Platte gemäß dieser Neuerung dadurch herstellen, daß die gesamte Grillgutauflageplatte 1 einstückig als Blechform, -stanz- sowie -Prägeteil ausgebildet ist und die Heißluftdurchtrittsöffnungen 7, 7a als vorzugsweise aufgebogene Ein- oder Ausschnitte des
Materials in der Plattenoberfläche 1 liegen.

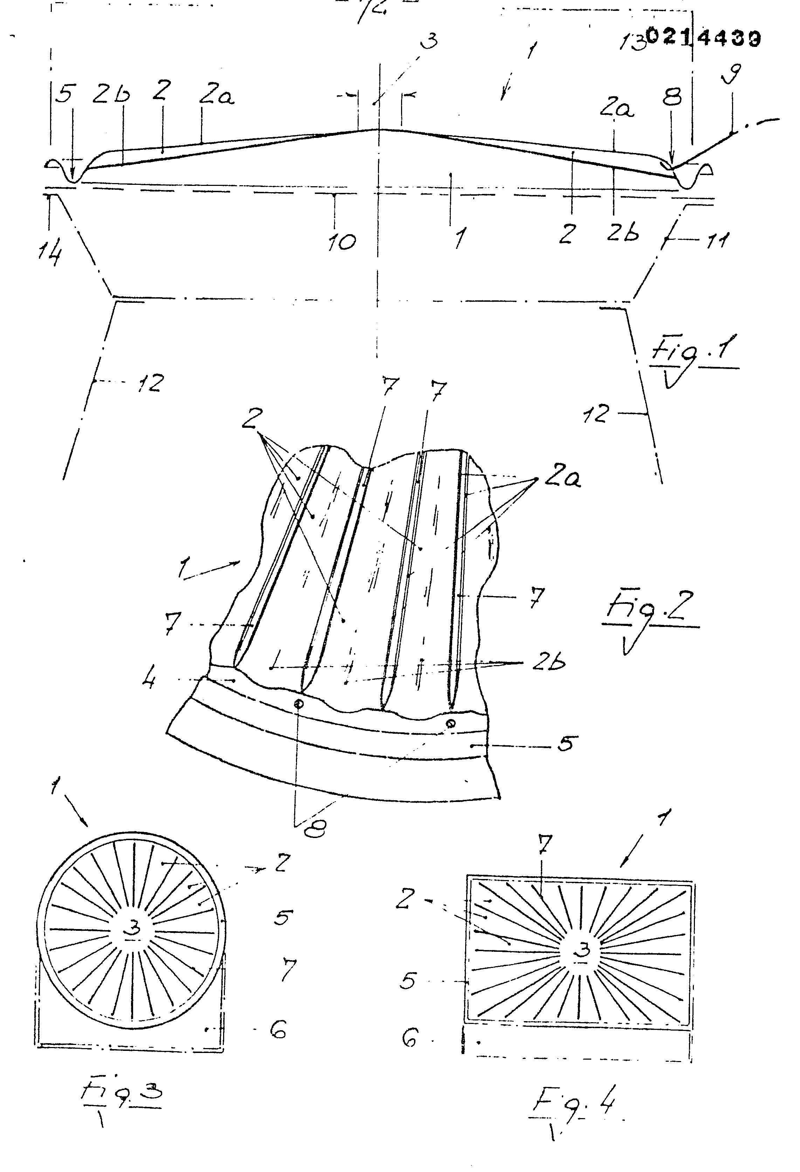

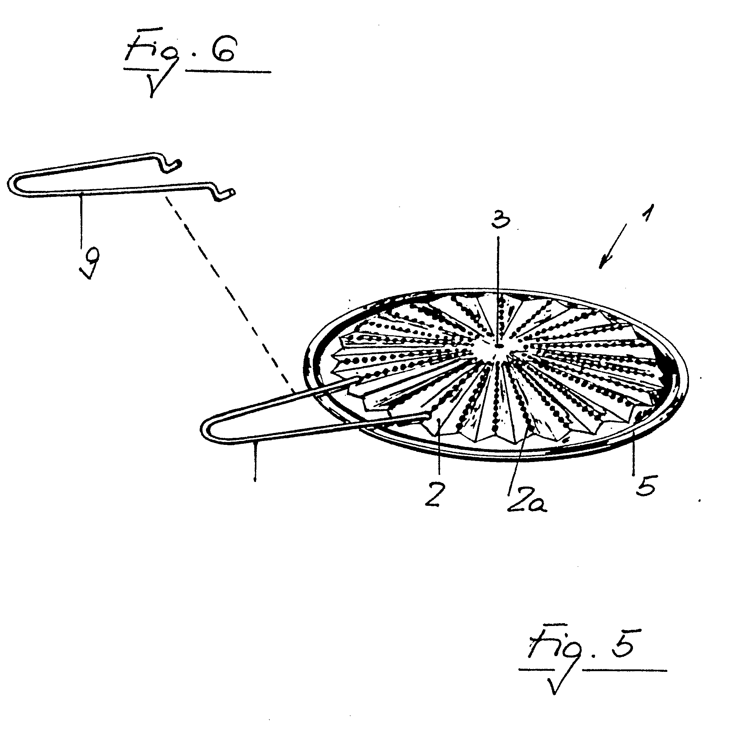

Gemäß der Darstellung in den Fig. 3 und 4 kann dabei
die Grundform rund oder rechteckig ausgebildet sein,
sowie eine zumindest einseitige Erweiterung des Sammelkanals 5 zu einer Sammelschale- bzw. Fettauffangschale
6 und zusätzlich noch Aussparungen 8 in den Randzonen 4 zum Einsetzen eines Abhebegriffes 9 o. dgl.,
aufweisen. Möglich ist aber auch eine Dimensionierung
des letzteren 9 bzw. seiner abgekröpften freien Enden
9a zum unmittelbaren Einsetzen in die lochförmigen
Heißgasdurchtrittsschlitze 7a gemäß Fig. 5.

Wie in Fig. 1 angedeutet wird die erfindungsgemäße
Platte im allgemeinen als Auflage auf dem herkömmlichen Grillrost 10 bei Grillgeräten mit Glutschale
11, Standbeinen 12 und Windschutzblech 13, verwendet,
kann aber auch ohne den Grillrost 10 unmittelbar
auf dem Glutschalenrand 14 aufsitzen.

Insgesamt gesehen müssen folgende Vorteile dieser
Erfindung nochmals herausgestellt werden:

1. Dieser neue Grillrost ermöglicht nahezu rauchfreies und umweltfreundliches Grillen. Kein Fett oder Fleischsaft tropfen mehr in die Holzkohlenglut, denn der Rost ist so konstruiert, daß Fett und Saft nach außen zu einer umlaufenden Rinne abgeleitet werden. Nur die heiße, würzige Luft des Holzkohlenfeuers kann durch die Öffnungen strömen, damit das Grillgut den charakteristischen Grillgeschmack bekommt und knusprig gart.

2. Bei einem stark durchwachsenen oder gar fetten Fleischstücken lodern keine Flammen mehr auf und das Gegrillte wird gleichmäßig braun. Selbst halbe Hähnchen lassen sich auf diesem Grillrost schmackhaft zubereiten.

3. Dieser Grillrost ist trotz seiner runden Form nicht nur für Rundgrills, sondern für jede Art von Holzkohlengrills geeignet. Auch auf einem öffentlichen Grillplatz, wo die Roste oft stark verschmutzt sind, macht es wieder Spaß zu Grillen, denn mit dem neuen Rost ist es jetzt eine saubere Sache.

0214439

4. Die Anwendung ist denkbar einfach: Der mitgelieferte Handgriff wird in zwei Löcher eingehängt (siehe - Zeichnung) und dann wird der Zusatzrost einfach auf den vorhandenen Gitterrost des Holzkohlengrills oder der Grillstelle aufgelegt.

5. Der neue Grillrost ist leicht zu reinigen. Er ist aus Edelstahl Rostfrei hergestellt und zur Reinigung kann man feine Stahlwolle, eine Bürste mit feinen Metallborsten, einen Haushaltsschwamm oder ein Putzmittel, das auch für Edelstahl-Töpfe geeignet ist, verwenden.

0214439

## Bezugsziffernverzeichnis

| | |
|---|---|
| 1 | Grillgutauflage |
| 2 | Ablaufrinne |
| 2a | Auflagekanten |
| 2b | Rinnenboden |
| 3 | Plattenzentrum |
| 4 | Randzonen |
| 5 | Sammelkanal |
| 6 | Sammelschale |
| 7 | Heißgasdurchtrittsöffnungen (schlitzförmig) |
| 7a | Heißgasdurchtrittsöffnungen (lochförmig) |
| 8 | Aussparung für Abhebegriff |
| 9 | Abhebegriff |
| 9a | abgekröpfte Enden |
| 10 | Grillrost |
| 11 | Glutschale |
| 12 | Standbeine |
| 13 | Windschutzblech |
| 14 | Glutschalenrand |

European Patent Attorney

Dipl.- Ing. **NORBERT W. SEEMANN** Patentbüro. 0214439

Patent- und Zivilingenieur
Mandataire en brevets Européens

Brehmstraße 37
D-7320 Göppingen

Tel. 07161-71166

Telegramme:
„Seepatent"

- 1 -

Anmelderin:

Reinhold Mack GmbH & Co.

Werkzeugbau - Metallwaren

Jahnstraße 144

7320   Göppingen

17. Juli 1986

EP (G) 8516 (M)

Patentansprüche

1. Teller- oder plattenförmige Grillgutauflage (1) für vor allem von unten mittels Holzkohlenglut beheizte Gartengrillgeräte (10 bis 14), wobei diese Grillgutauflage (1) einerseits rinnenförmig ausgebildete Partien (2) zur Ableitung abtropfenden Fetts bzw. Fleischsaftes zu einer Sammelschale (6) o. dgl. hin aufweist, und andererseits zwischen diesen Rinnen (2), Öffnungen (7, 7a) vorhanden sind, zum Durchtritt der aufsteigenden Heißluft bzw. Holzkohlen-Heizgase,

d a d u r c h   g e k e n n z e i c h n e t ,

daß die Ablaufrinnen (2) vom Plattenzentrum (3) aus geneigt zu den tiefer liegenden Randzonen (4) der jeweiligen Platte (1) hin verlaufen und die Heizgasdurchtrittsöffnungen (7, 7a) sich jeweils im Bereich zwischen den Grillgutauflagekanten (2a) zueinander benachbarter Ablaufrinnen (2) befinden.

2. Grillgutauflage nach Anspruch 1,

g e k e n n z e i c h n e t    d u r c h

eine von oben gesehen sternförmig verlaufende, symmetrische Anordnung der Ablaufrinnen (2) und Einmündung derselben in einen entsprechend vertieften Sammelkanal (5) in den Randzonen (4) der Platte (1).

3. Grillgutauflage nach den Ansprüchen 1 und 2,

g e k e n n z e i c h n e t    d u r c h

eine zumindest einseitige Erweiterung des Sammelkanals (5) zu einer Sammel- bzw. Fettauffangschale (6).

4. Grillgutauflage nach den Ansprüchen 1 bis 3,

d a d u r c h   g e k e n n z e i c h n e t ,

daß die gesamte Grillgutauflageplatte (1) einstückig als Blechform, -stanz- sowie -prägeteil ausgebildet ist und die Heißluftdurchtrittsöffnungen (7, 7a) als aufgebogene Ein- oder Material- Ausschnitte in der Plattenoberfläche (1) liegen.

5. Grillgutauflage nach den Ansprüchen 1 bis 4,

g e k e n n z e i c h n e t   d u r c h

gesonderte Aussparungen (8) in den Randzonen (4) der Grillgutauflage (1) zum Einsetzen eines Abhebegriffes (Fig. 1 u. 2) oder Dimensionierung des letzteren (9) bzw. seiner abgekröpften freien Enden (9a) zum unmittelbaren Einsetzen in die lochförmigen Heißgasdurchtrittsschlitze (7a gemäß Fig. 5).

Fig.1

Fig.2

Fig.3

Fig.4

0214439

0214439

Fig. 6

9

3

1

2    2a    5

Fig. 5